(19) Europäisches Patentamt
European Patent Office
Office européen des brevets

(11) Publication number: 0 120 130
B1

(12) EUROPEAN PATENT SPECIFICATION

(45) Date of publication of patent specification: 19.08.87

(51) Int. Cl.⁴: C 08 L 79/08, F 16 C 33/20

(21) Application number: 83112464.9

(22) Date of filing: 10.12.83

(54) **Polyetherimide bearing compositions.**

(30) Priority: 28.12.82 US 454064

(43) Date of publication of application:
03.10.84 Bulletin 84/40

(45) Publication of the grant of the patent:
19.08.87 Bulletin 87/34

(84) Designated Contracting States:
DE FR GB NL

(56) References cited:
FR-A-2 252 364
FR-A-2 298 033
FR-A-2 307 034

(73) Proprietor: GENERAL ELECTRIC COMPANY
1 River Road
Schenectady New York 12305 (US)

(72) Inventor: Johnson, Robert Owen
29 Birchwood Lane
Lenox Massachusetts 01240 (US)

(74) Representative: Catherine, Alain et al
General Electric - Deutschland Munich Patent
Operation Frauenstrasse 32
D-8000 München 5 (DE)

EP 0 120 130 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to novel non-metallic bearing compositions. More particularly, the invention relates to polyetherimide-based non-metallic bearing compositions.

Virtually all machinery which contains moving parts utilizes bearings to reduce wear between stationary and moving components. The most common types of bearings are roller bearings, which employ balls or needles retained by a cage with an inner and outer race. These bearings are relatively complex, require considerable lubrication and are noisy. They are also relatively bulky and heavy, which precludes their use in certain applications.

Alternatives to roller bearings are journal bearings or bushings and thrust washers. When these types of bearings are made of metal, lubrication is required and in the event of a loss of lubrication, failure is usually catastrophic. Also, start-up wear and noise levels can be high. Moreover, the relatively high weights of these bearings can be disadvantageous, particularly in transportation applications.

One approach to overcoming many of the foregoing problems had been to employ self-lubricating bearings. Presently, self-lubricating bearings are of two general types: plastics modified and various lubricants and fillers, and soft, porous metals (such as bronze, lead, and aluminum) impregnated with oil. Oil impregnated metallic bearings are effective, but they are also expensive and are difficult to form into the desired shape.

Self-lubricating plastic bearing compositions are finding increasing applications. Depending upon the performance requirements of the bearing, a wide variety of plastic materials and compositions can be employed for bearing fabrication. For example, in light applications, such as small appliances and toys unmodified conventional plastic materials, such as polycarbonates, polyethylene, polyacetal and nylon have been employed. As performance requirements become more demanding, nonmetallic bearing compositions have become more exotic. Presently, a wide variety of resin materials are modified with various fillers and reinforcements to provide greater wear resistance and load- bearing properties and to reduce friction. Nevertheless, the major applications for nonmetallic bearings have remained relatively low in performance requirments. Excellent bearing compositions have, however, been prepared from thermosetting and certain thermoplastic polyimide resins reinforced with glass fibers and containing certain lubricants. Typical compositions have load-bearing capacities approaching those of oil-impregnated metallic bearings. These compositions are available from Dupont, Wilmington, Delaware, U.S.A. under the trademark Vespel®. These materials are relatively expensive and are not amenable to injection molding. Therefore, they must be machined to the desired shape, which contributes substantially to the cost of the finished product, and which also limits the possible physical configurations of the finished product.

There is a continuing need for high performance, nonmetallic bearing compositions which have excellent wear resistance and load-bearing capacities, and which can be fabricated into a wide variety of shapes by relatively simple injection molding techniques.

In accordance with the present invention, bearing compositions contain a polyetherimide resin as hereinafter defined and the following modifiers and reinforcements: (a) from 1% to 25% by weight of a fluoropolymer; (b) from 1% to 25% by weight of a lubricating agent selected fromthe group consisting of silicone fluid, molybdenum disulfide, graphite or a molybdenum disulfide containing solid lubricant, or any mixture thereof; and (c) from 0% to 50% by weight of a reinforcing agent selected from the group consisting of glass fibers, carbon fibers and glass beads or mixtures thereof; wherein the above proportions are selected such that said bearing composition contains from 35% to 60% by weight polyetherimide resin and from 40% to 65% by weight fillers and reinforcements.

The polyetherimides described herein are unique injection moldable thermoplastics, which are characterized by high impact strengths, high glass transistion temperatures, and excellent processability. It is known that these resins can be reinforced with various materials, such as glass fibers, silica fillers, carbon whiskers, carbon fibers, and carbon powders to produce composites for structural applications. For example, see U.S. Patent 3,803,085, U.S. Patent 3,699,075 and U.S. Patent 4,049,613. The nonmetallic bearing compositions of the present invention are novel polyetherimide composites which contain selected modifiers and reinforcements to provide wear resistance, load-bearing capacity and low coefficients of friction heretofore achieved only with metallic bearings or certain thermoset and thermoplastic polyimide resins.

The polyetherimides employed in the present invention are represented by the formula:

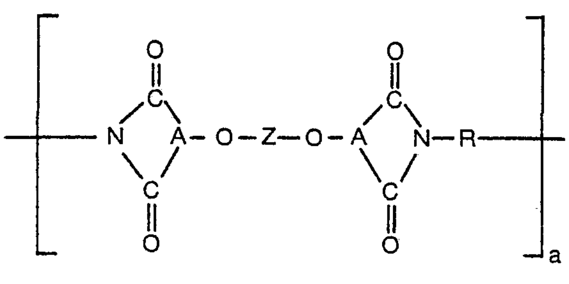

where "a" represents a whole number from 10 to 10,000 the group

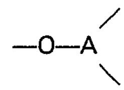

is selected from:

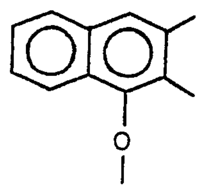

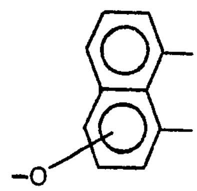

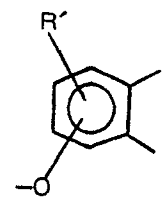

R′ being hydrogen, lower alkyl or lower alkoxy, preferably the polyetherimide includes the latter

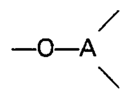

group where R′ is hydrogen such that the polyetherimide is of the formula:

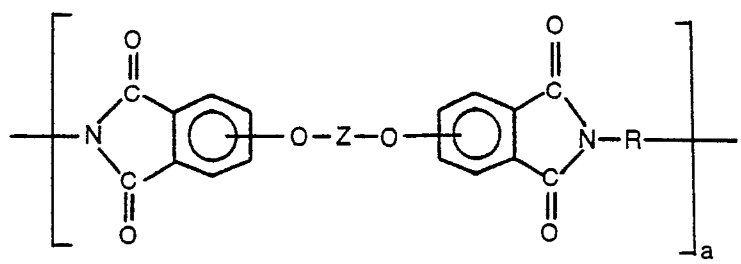

and the divalent bonds of the O—Z—O-radical are in a 3,3′; 3,4′; 4,3′ or the 4,4′ position; Z is a member of the class consisting of (1)

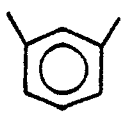

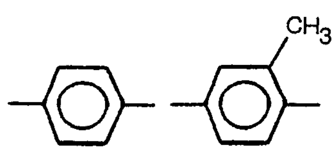

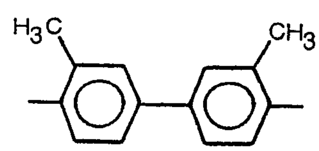

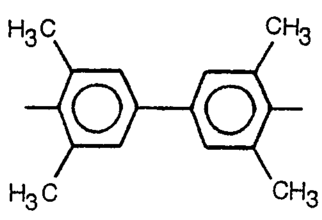

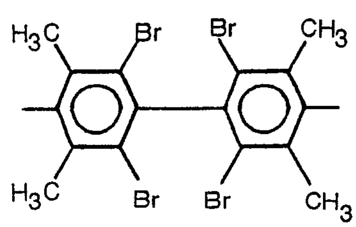

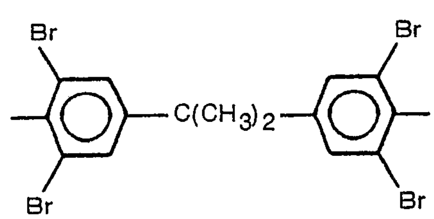

and (2) divalent organic radicals of the general formula:

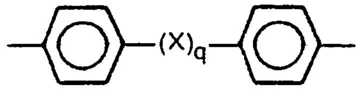

where X is a member selected from the class consisting of divalent radicals of the formulas,

$-C_yH_{2y}-$, 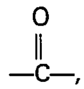, 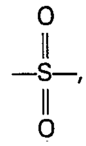, —O— and —S—,

where q is 0 or 1, y is a whole number from 1 to 5, and R is a divalent organic radical selected from the class consisting of (1) aromatic hydrocarbon radicals having from 6—20 carbon atoms and halogenated derivatives thereof, (2) alkylene radicals and cycloalkylene radicals having from 2—20 carbon atoms, $C_{(2-8)}$ alkylene terminated polydiorganosiloxane, and (3) divalent radicals included by the formula

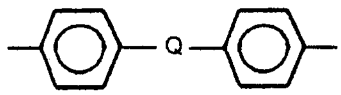

where Q is a member selected from the class consisting of

—O—, 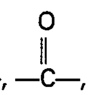, 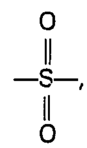, —S— and $-C_xH_{2x}-$

where x is a whole number from 1 to 5 inclusive. Particularly preferred polyetherimides for the purposes of the present invention include those where

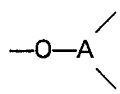

and Z respectively are:

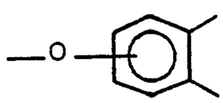 and 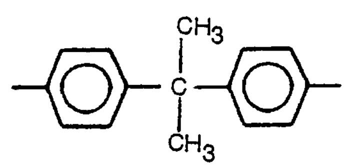

and R is selected from:

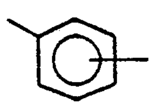 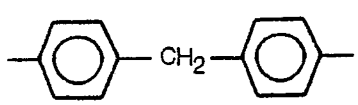 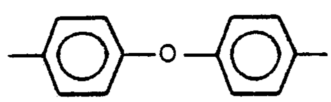

The polyetherimides where R is m-phenylene are most preferred.

Preferred polyetherimides have glass transistion temperatures exceeding about 200°C, and most preferably exceeding about 215°C. High operating temperatures are the primary causes of failure of nonmetallic bearings, and those materials which can withstand high temperatures without distorting or decomposing are preferred.

The polyetherimides can be obtained by any of the methods well known to those skilled in the art including the reaction of any aromatic bis(ether anhydrides) of the formula

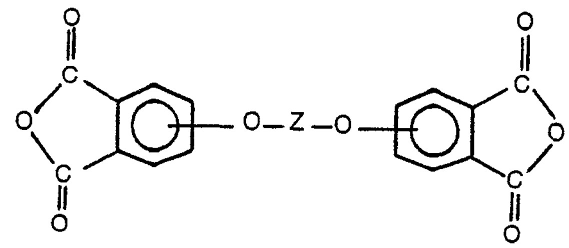

where Z is as defined hereinbefore with an organic diamine of the formula

$$H_2N—R—NH_2$$

where R is as defined hereinbefore.

Aromatic bis(ether anhydride)s of the above formula include, for example, 2,2-bis[4-2,3-dicarboxyphenoxy)phenyl] propane dianhydride;
4,4'-bis(2,3-dicarboxyphenoxy)diphenyl ether dianhydride
1,3-bis(2,3-dicarboxyphenoxy)benzene dianhydride;
4,4'-bis(2,3-dicarboxyphenozy)diphenyl sulfide dianhydride;
1,4-bis(2,3-dicarboxyphenoxy)benzene dianhydride;
4,4'-bis(2,3-dicarboxyphenoxy)benzophenone dianhydride;
4,4'-bis(2,3-dicarboxyphenoxy)diphenyl sulfone dianhydrides; etc
2,2-bis[4-(3,4-dicarboxyphenoxy)phenyl]propane dianhydride;
4,4'-bis(3,4-dicarboxyphenoxy)diphenyl ether dianhydride;
4,4'-bis(3,4-dicarboxyphenoxy)diphenyl sulfide dianhydride;
1,3-bis(3,4-dicarboxyphenoxy) benzene dianhydride;
1,4-bis(3,4-dicarboxyphenoxy) benzene dianhydride;
4,4'-bis(3,4-dicarboxyphenoxy)benzophenone dianhydride;
4-(2,3-dicarboxyphenoxy)-4-(3,4-dicarboxyphenoxy)diphenyl-2,2-propane dianhydride; etc., and mixtures of such dianhydrides.

In addition, aromatic bis(ether anhydride)s also included by the above formula as shown by Koton, M.M.; Florinski, F.S.; Bessonov, M.I., Rudakov, A.P. (Institute of Heteroorganic Compounds, Academy of Sciences, U.S.S.R.), U.S.S.R. 257,010, Nov. 11, 1969, Appl. May 3, 1967. Also, dianhydrides are shown by M.M. Koton, F.S. Florinski, Zh Org. Khin, 4(5), 774 (1968).

Organic diamines of the above formula include, for example, m-phenylenediamine, p-phenyldiamine, 4,4'-diaminodiphenyl propane, 4,4'-diaminodiphenylmethane, benzidine, 4,4'-diaminodiphenyl sulfide, 4,4'-diaminodiphenyl sulfone, 4,4'-diaminodipheyl ether; 1,5-diaminoaphthalene, 3,3'-dimethylbenzidine, 3,3'-dimethoxybenzidine, 2,4-bis(β-amino-t-butyl) toluene, bis(p-β-amino-t-butylphenyl)ether, bis(p-β-methyl-o-aminophenyl)benzene, 1,3-diamino-4-isopropylbenzene, 1,2-bis(3-aminopropoxy)ethane, m-xylylenediamine, p-xylylenediamine, 2,4-diaminotoluene, 2,6-diaminotoluene, bis(4-aminocyclohexyl)methane, 3-methylheptamethylene-diamine, 4,4-dimethylheptamethylenediamine, 2,11-dodecanediamine, 2,2-dimethylpropylenediamine, octamethylenediamine, 3-methoxyhexamethylene-diamine, 2,5-dimethylhexamethylenediamine, 2,5-dimethylheptamethylenediamine, 3-methyl-heptamethylenediamine, 5-methylnonamethylenediamine, 1,4-cyclohexanediamine, 1,12-octadecane-diamine, bis(3-aminopropyl)sulfide, N-methyl-bis(3-aminopropyl)amine, hexamethylenediamine, heptamethylenediamine, nonamethylenediamine, decamethylenediamine, bis(3-aminopropyl) tetramethyldisiloxane, bis(4-aminobutyl)tetramethyldisiloxane, etc.

In general, the reaction can be advantageously carried out employing well-known solvents, e.g., o-dichlorobenzene, m-cresol/toluene, etc., to effect interaction between the dianhydrides and the diamines, at temperatures of from 100 to 250°C. Alternatively, the polyetherimides can be prepared by melt polymerization of any of the aforementioned dianhydrides with any of the aforementioned diamine compounds while heating the mixture of the ingredients at elevated temperatures with concurrant intermixing. Generally, melt polymerization temperatures between about 200° to 400°C. and preferably 230° to 300°C. can be employed. Any order of addition of chain stoppers ordinarily employed in melt polymerization can be employed. The conditions of the reaction and the proportions oif ingredients can be varied widely depending on the desired molecular weight, intrinsic viscosity and solvent resistance. In general, equimolar amounts of diamine and dianhydride are employed for high molecular weight polyetherimides, however, in certain instances, a slight molar excess (about 1 to 5 mol percent) of diamine can be employed resulting in the production of polyetherimides having terminal amine groups. Generally, useful polyetherimides have an intrinsic viscosity greater than 0.2 deciliters per gram, preferably 0.35 to 0.60, or 0.7 deciliters per gram or even higher when measures in m-cresol at 25°C.

Included among the many methods of making the polyetherimides are those disclosed in U.S. Patent Nos. Heath et al., 3,847,867, Williams 3,847,869, Takekoshi et al. 3,850,885, White 3,852,242 and 3,855,178.

Particularly preferred polyetherimides for the compositions of the present invention are represented by the formula

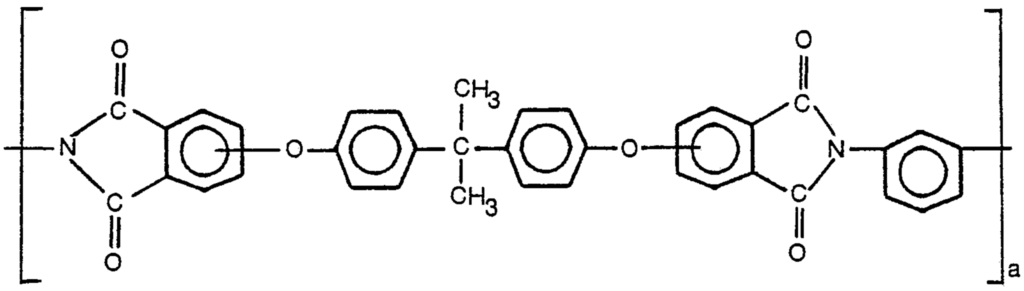

wherein "n" is an integer ranging from 10 to 100. This material is commercially available from General Electric Company, Pittsfield, Massachusetts under the registered trademark, ULTEM®.

Although unmodified polyetherimids resins can be used for the fabrication of bearings for certain low performance applications, the characteristics of the material can be greatly improved by the addition of certain modifiers and reinforcements. These modifiers and reinforcements serve to reduce the coefficient of friction between the bearing and the mating surface (e.g. a shaft) and to reduce the rate of wear of the bearing.

One type of material which serves both of these functions is fluropolymer, such as polytetrafluoroethylene ("PTFE") fluorinated ethylene-propylene("FEP"), and perfluoroalkoxy (PFA"). These polymers are available commercially in powdered from and can conveniently be incorporated into the bearing compositions of the present invention. They are known for their ability to reduce friction between moving parts, and in the present compositions, they tend to reduce the wear rate not only of the nonmetallic bearing but also of the opposing surface, which is usually metallic. The fluoropolymer employed in the present compositions is generally in powdered form, and has a particle size ranging from 1 to 25 micrometers preferably from 5 to 10 micrometers particularly preferred fluorpolymer is PTFE which is available from Allied Chemical Corporation, Morristown, New Jersey under the trademark Polymist®F. The fluoropolymer is generally employed in a concentration of from 1% to 25% by wt. Concentrations greater than about 25% do not appreciably improve the properties of the composition, and can even have a deleterious effect on the strength and load bearing capacity of bearings fabricated from the composition. On the other hand, concentrations lower than about 1% by wt. are generally ineffective in providing the desired characteristics to the compositions. Preferred concentrations of fluoropolymer range from 5% by wt. to 20% by wt., most preferably 15% by wt. of the composition.

In addition to a fluoropolymer, the compositions also include a lubricant for significantly reducing the coeffficient of friction between the bearing and the opposing surface. Such lubricants are generally selected from three classes of materials or mixtures thereof. The first class of lubricants are molybdenum disulfide or special formulations of molybdenum, disulfide-containing materials. The second class of solid lubricant is graphite, and the third class is silicone fluid. Whatever the lubricant, it is advantageously employed as a finely divided powder or a liquid in the case of silicone fluids. Generally, the particle size is smaller than about 200 mesh (0.075 mm), preferably smaller than about 300 mesh (0.040 mm) (note: mesh size reefers to the ability to pass through a standard Tyler mesh screen). Both graphite and molybdenum disulfide are commercially available as powders having the desired particle sizes. In addition, special formulations of molybdenum disulfide are available. A particularly preferred solid lubricant is available from Dow Corning Corporation, Midland, Michigan under the trademark Lublide. The concentration of the solid lubricant in the bearing compositions of the present invention can vary depending on the particular material used. Generally, such concentrations range from 1% by weight to 25% by weight of the total composition. For molybdenum disulfide or molybdenum disulfide-containing lubricants, preferred concentrations range from 1% to 15% by wt., most preferably about 2.5% by wt. Graphite lubricants are preferably employed in concentrations ranging from about 5% by wt. to about 20% by wt., most preferably about 20% by wt. Mixtures of these materials can also be used, provided that the total amount of solid lubricant falls within the described ranges.

The third class of lubricants is comprised of fluids based on polysiloxane, and are particularly effective when used in conjunction with PTFE. Loadings are generally quite low, on the order of 1 to 5% by wt. of the total composition.

The present compositions also employ a reinforcing agent, whose function is to reduce the rate of wear of nonmetallic bearings fabricated from the compositions. The reinforcing material is selected from the group consisting of glass fibers, carbon fibers, and glass beads. These materials are well known in resins art, and the first two are widely used as reinforcements for structural materials. Bearing compositions for lower performance applications can be obtained without using a reinforcing material; however, the strength and durability of the composite is substantially improved by including such materials. Glass fibers are the most common reinforcing agents, and are preferred for the compositions of the present invention

because of their low cost and the desirable properties they impart to the compositions. The glass fibers employed in this composition are generally so-called "chopped" strands which contain strands having average lengths from 3 to 6 mm. Longer strands tend to increase the abrasiveness of the composites whereas shorter strands do not impart the desired strength to the composite. Preferred glass fibers have average strand lengths of approximately 3 mm.

Carbon fibers are employed for the production of extremely tough and durable resin composites. Such composites are finding a wide variety of applications ranging from sporting goods to aerospace. The cost of carbon fibers is presently considerably higher than that of glass fibers, therefore, generally their use would be limited to those applications where their superior properties outweigh the higher costs. The carbon fibers employed in the composition have strand lengths generally ranging from 0.4 mm to 6 mm and diameters ranging from 5 to 25 micrometers. Carbon fibers presently available are produced either by the so called "pitch" or PAN" methods. Fibers made by either of these procedures can be employed in the present compositions; however, fibers made by the pitch method have been found superior and are preferred for the present invention.

Glass beads can also be used a reinforcing materials and can be substituted in whole or in part for glass or carbon fibers. Glass beads are also commercially available in a wide range of particle sizes, and those beads having particle sizes ranging from 1 to 55 micrometers are generally employed. Preferred glass beads have particle sizes ranging from 5 to 45 micrometers.

The total amount of reinforcing material used in the present compositions can range from zero to 50% by wt. of the total composition. The upper concentration limit for the reinforcing materials is to a large part determined by the abrasiveness of the resulting composite. These materials, particularly fibers, can be quite abrasive, and this abrasiveness can result in substantial wear of the surface which mates with a nonmetallic bearing. Preferred concentrations for glass fibers range from 5% by wt. to 40 by wt. of the composition and preferably are about 25% by wt. of the composition. Preferred ranges for carbon fibers range from 5% by wt. to 30% by wt. with a preferred concentration of about 10% by wt. of the composition. Preferred ranges for glass beads range from 5% by wt. to 40% by wt. with a particularly preferred concentration of about 20% by wt. of the composition.

It will be appreciated by those skilled in the art that the concentrations of the various fillers and reinforcements described above will be selected to obtain a composition having the desired characteristics for the particlar application envisaged. In general, the proportions are selected such that the final bearing compositions contain from 35% by wt. to 60% by wt. of the polyetherimide resin and from 40% by wt. to 65% by wt. of fillers and reinforcements.

The bearing compositions of this invention have generally been found to have good wear resistance and load-bearing capacities, have a low coefficient of friction and produce very little wear on moving parts. The compositions can be prepared by any suitable blending technique which results in intimate mixing of the resin, the fillers and the reinforcements. This mixing can advantageously be accomplished in an extrusion apparatus which is maintained at a temperature higher than the glass transition temperature of the polyetherimide resin beign employed, e.g., from 250° to 400°C. Generally, the pelletized or powdered resin material is mixed with the other dry ingredients and/or silicone fluids and fed into the hopper of such an extrusion apparatus. The resin is melted in the extrusion apparatus and intimately mixed with the other components and is then extruded through a die, air cooled and chopped to form a pelletized bearing composition.

A particular advantage of the compositions of the present invention is that they can be injection molded to a variety of different shapes. Injection molding is considerably less expensive than machining and also permits greater flexibility in designing the shape of the finished product. These compositions can be molded into relatively thin-walled structures resulting in economies in not only raw material costs but also of space and weight. Perhaps more importantly, the thin-walled constructions result in greater heat dissipation, which can improve the performance of the bearing.

The characteristics of the various compositions of the present invention are generally determined by certain standardized tests. One of these tests measures the "PV limit" of bearing material. In this test, a bearing (generally a thrust washer) is placed in contact with a polished steel surface which rotates a constant velocity. The force between the steel surface and the bearing is gradually increased in a stepwise manner, and conditions are allowed to stabilize after each step. The maximum force which results in no distortion of the bearing is multiplied times the velocity and this figure is used as a measure of the allowable operating limits of the composition. Another test for these compositions is the wear rate. Again, a thrust washer fabricated from the composition being tested is mounted on a rotating holder and is pressed against a steel surface. The steel surface is mounted on an antifriction bearing equipped with a torque arm. Bearing temperature and friction torque are continuously monitored. After a break-in period (usually about 40 hours) the plastic washer is removed and weighed to four place accuracy. Subsequent wear is reported as milligrams per hour at specified speed and load.

The present invention is illustrated by the following examples, which are not intended to be limiting. "PV limits" "wear rates" and "coefficients of friction" are determined by the foregoing procedures. In addition, the condition of the steel surface which engages the bearing was also noted as an indication of the abrasiveness of the bearing composition being tested.

Examples I—XXIII

Several compositions were prepared by blending polyetherimide resin of the formula

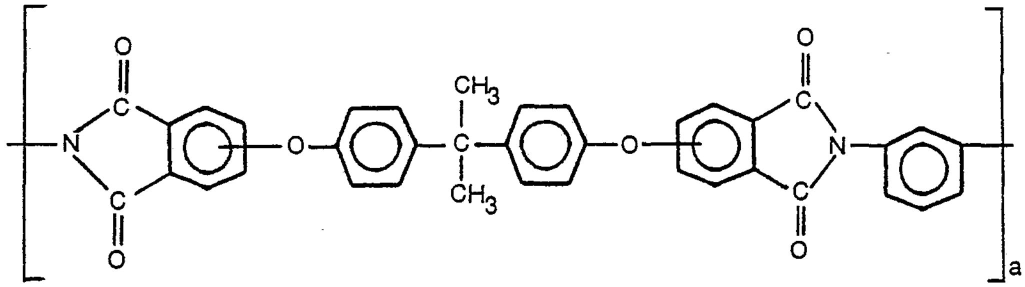

wherein n averages from 10 to 100, wiuth the various fillers and reinforcements indicated in Table 1. The compositions were prepared by melt blending the ingredients in an extrusion apparatus at a temperature of 350°C. The resulting composition was extruded, air-cooled and chopped into pellets. These pellets were then injection molded in ⅛ inch (3.175 mm) thick plaques. Samples for testing were machined from the plaques without modifying the molded testing surface. All samples were cleaned with hexane prior to testing. For the PV limit, wear rate, and coefficient of friction tests, a thrust washer tester designated LFW-6® and manufactured by Faville-LaValley Corporation was employed. The sample thrust washer was machined to a size of $1\frac{1}{8}$ inch (28.57 mm) outside diameter and a contact area of 0.4 $in^2$. The thrust washer was mounted on a rotating holder and pressed against a dry, cold rolled, carbon steel wear ring with specified hardness and finish. Teh steel ring was mounted on an anti-friction bearing equipped with a torque arm. Bearing temperature and friction torque were continously monitored. After break-in (about 40 hours);, the plastic washer was removed and weighed to four place accuracy. Subsequent wear was reported as milligrams per hour at specified speed and load. A separate plastic specimen was used to determine the PV limit. At a sliding speed of 100 feet/min (30.48 m/min), load was increased in a stepwise manner and conditions were allowed to stabilize at each point. The pressure at which stabilization occurred was defined as the PV limit and was reported as the product of speed and the highest usable load. The results of these tests for the various compositions are reported in Table 1 below. For comparison purposes, the unmodified polyetherimide resin was tested as well as several compositions containing less than all of the components of the compositions of the invention described herein. The results shown in Table 1 demonstrate that the bearing compositions of this invention can be injected molded to provide bearings having excellent frictional, wear resistance, and load-bearing capabilities. Unless otherwise indicated, the graphite, Lubolid and $MoS_2$ had particle sizes of 200—300 mesh (0.075 mm—0.040 mm). The glass fiber was silane-treated and chopped to average strand lengths of about 3 mm. Glass beads had average particle sizes of 1—55 micrometers.

TABLE 1

| Example No. | Carbon Fiber (PAN) wt.% | Carbon Fiber (Pitch) wt.% | Graphite wt.% | PIFC wt.% | Glass Fibers wt.% | Glass Beads wt.% | Lubolid® wt.% | $MoS_2$ wt.% | Coefficient of Friction | Wear @ PV=2000 (mq/hr) | PV limit @ (30.48 m/min) 100 ft/min (m psi.fpm) | Steel Condition ($10^3$xda $W/mm^2$.m/min) |
|---|---|---|---|---|---|---|---|---|---|---|---|---|
| I | | | | | | | | | 0.16 | 10.0 | 10 (2.1) | S |
| II | 17 | | | | | | | | 0.12 | 0.28 | 13.5 (2.83) | S |
| III | | 17 | | | | | | | 0.11 | 0.18 | 12.5 (2.62) | S |
| IV | | | 17 | | | | | | 0.11 | 4.6 | 12.5 (2.62) | W |
| VII | | | | 13 | | | | | 0.12 | 1.0 | 45 (9.45) | S |
| VIII | | 16 | | 4 | | | | | 0.14 | 0.3 | 30 (5.30) | S |
| IX | | | 6 | | | | | 16 | 0.15 | 2.3 | 17.5 (3.67) | OK |
| X | | | | | 12 | | | 8 | 0.11 | 0.6 | 52.5 (11.02) | OK |
| XI | | | 9 | | | | 3 | | 0.13 | 2.0 | 12.5 (2.62) | OK |
| XII | | | 10 | 3 | | | | | 0.12 | 0.75 | 14 (2.94) | OK |
| XIII | | 10 | | | | | | | 0.14 | 0.7 | 45 (9.45) | W |
| XIV | | | | 15** | | | | | 0.12 | 0.5 | 42 (8.82) | OK |
| XXI | | | 10 | | | 20 | 2.5 | | 0.13 | 0.063 | 88 (18.48) | OK |
| XXIII | | | | 15** | | | | | 0.12 | 0.077 | | OK |

* S = scratched
W = worn
OK = smooth or polished
** Allied Polymist® F—S( all others Dupont SX6000)

**Claims**

1. A bearing composition which comprises a polyetherimide resin of the formula:

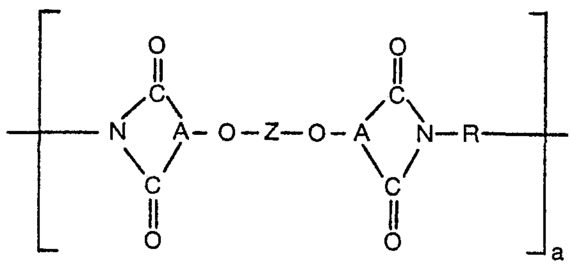

an the following modifiers and reinforcements:

(a) from 1% to 25% by wt. of a fluoropolymer;

(b) from 1% to 25% by wt. of a lubricating agent selected from the group consisting of silicone fluid, a molybdenum disulfide, graphite or a molybdenum disulfide-containing solid lubricant, or any mixture thereof; and (c) from 0% to 50% of a reinforcing agent selected from the group consisting of glass fibers, carbon fibers, glass beads and mixtures thereof; wherein the above proportions are selected such that said bearing compositions contain from 35% by wt. to 60% by wt. polyetherimide resin and from 40% by wt. to 65% by wt. modifiers and reinforcements; wherein "a" represents a whole number from 10 to 10,000 the group

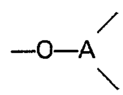

is selected from:

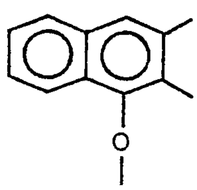
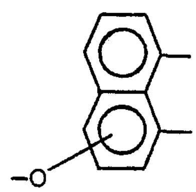
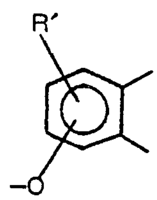

wherein R' is hydrogen, lower alkyl or lower alkoxy; Z is a member of the class consisting of (1)

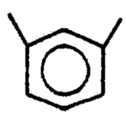
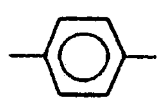
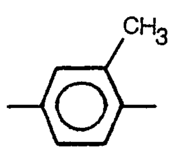
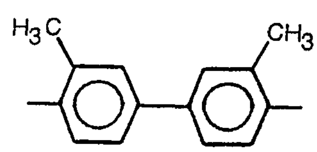

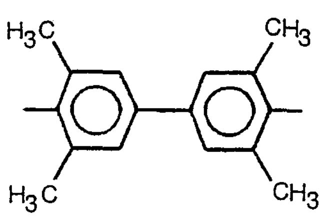
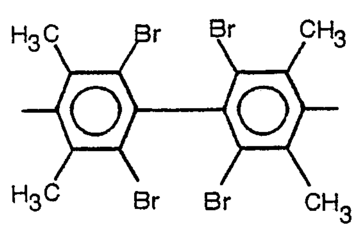

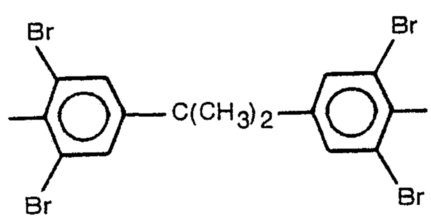

and (2) divalent organic radicals of the general formula

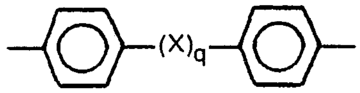

where X is a member selected from the class consisting of divalent radicals of the formula:

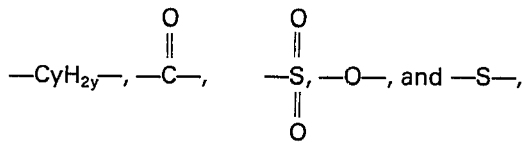

where q is 0 or 1, y is a whole number from 1 to 5 and R is a divalent organic radical selected from the class consisting of (1) aromatic hydrogen radicals having from 6 to 20 carbon atoms and halogenated derivatives thereof, (2) alkylene radicals and cycloalkylene radicals having from 2—20 carbon atoms, $C_{(2-8)}$ alkylene terminated polydiorganosiloxane, and (3) divalent radicals of the formula

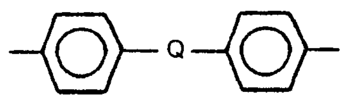

where Q is a member selected from the class consisting of

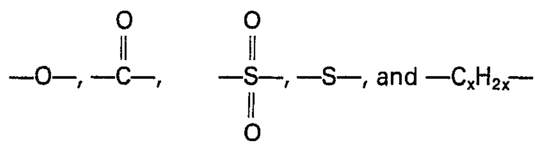

where x is a whole number from 1 to 5 inclusive.

2. The bearing composition of claim 1, wherein the group

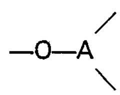

is

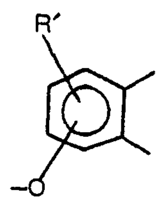

3. The bearing composition of claim 2, wherein Z is

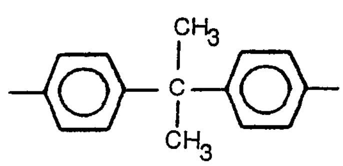

and R is

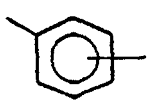 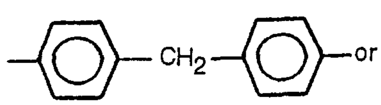 or 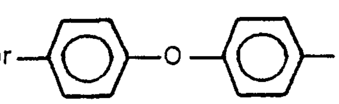

4. The bearing composition of claim 1, wherein the polyetherimide resin has the formula

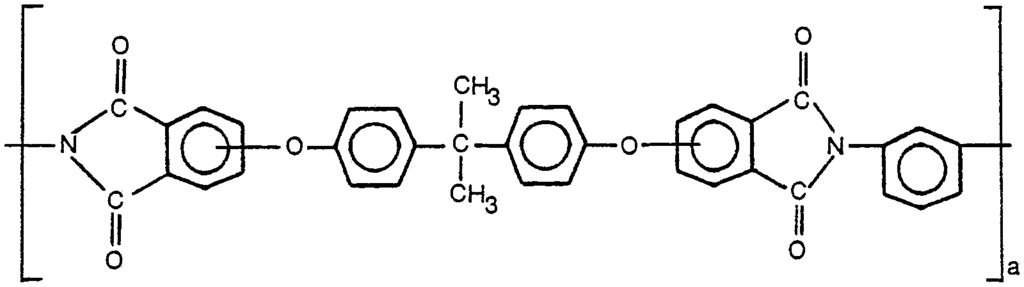

wherein n is an integer from 10 to about 100.

5. The bearing composition of claim 1, 2, 3 or 4 wherein the polyetherimide resin has a glass transition temperature of at least about 200°C, the fluoropolymer is polytetrafluoroethylene, has a particle size from 1 to 25 micrometers, and is present at a concentration of from 5% by wt. to 20% by wt. of the composition.

6. The bearing composition of claim 5, wherein the lubricating agent is molybdenum disulfide or a molybdenum disulfide-containing lubricant and is present at a concentration of from 1% by wt. to 15% by wt. of the composition.

7. The bearing composition of claim 5, wherein the lubricating agent is silicone fluid and is present at a concentration of 1% by wt. to 5% by wt. of the composition.

8. The bearing composition of claim 5, wherein the lubricating agent is graphite and is present at a concentration of from 5% by wt. to 20% by wt. of the composition.

9. The bearing composition of claim 6, wherein the reinforcing agent is glass fiber having chopped strands with average lengths from 3 mm to 6 mm wherein said glass fiber is present at a concentration from 5% by wt. to 40% by wt. of the composition.

10. The bearing composition of claim 6, wherein the reinforcing agent is carbon fiber having strands of average lengths from 0.4 mm to 6 mm and average diameters of from 5 micrometers to 25 micrometers wherein said carbon fiber is present at a concentration from 5% by wt. to 30% by wt. of the composition.

11. The bearing composition of claim 6, wherein the reinforcing agent contains glass beads having an average particle size of from about 1 to about 55 micrometers, and wherein said glass beads are present at a concentration of from 5% by wt. to 40% by wt. of the composition.

12. The bearing composition of claim 8, wherein the polyetherimide resin has a glass transition temperature of at least about 215°C.

13. The bearing composition of claim 4, wherein the polytetrafluoroethylene has a particle size of from 5 to about 10 microns and is present at a concentration of about 15% by wt. of the composition; the lubricating agent is molybdenum disulfide having a particle size from 200 (0.075 mm) to 300 mesh (0.040 mm) and is present at a concentration of about 2.5% by wt. of the composition; the reinforcing agent is silane-treated glass fiber having chopped strands with average lengths of 3 mm and which is present at a concentration of about 25% by wt. of the composition.

**Patentansprüche**

1. Lagerzusammensetzung, die ein Polyätherimidharz der Formel

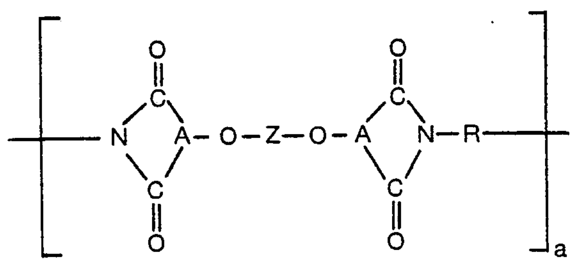

und die folgenden Modifierzierungs- und Verstärkungsmittel enthält:

(a) 1 bis 25 Gew.-% eines Fluorpolymers,

(b) 1 bis 25 Gew.-% eines Schmiermittels, ausgewählt aus der Gruppe, bestehend aus Siliconfluid, einem Molybdändisulfid, Graphit oder einem Molybdändisulfid enthaltenden festen Schmiermittel oder eine beliebige Mischung derselben und

(c) O bis 50% eines verstärkenden Mittels, ausgewählt aus der Gruppe, besthend aus Glasfasern, Kohlenstoffasern, Glasperlen und Mischungen derselben; worin die vorgenannten Anteile so ausgewählt

sind, daß die Lagerzusammensetzungen 35 bis 60 Gew.% Polyätherimidharz und 40 bis 65 Gew.% Modifizierungs- und Verstärkungsmittel enthalten, worin "a" eine ganze Zahl von 10 bis 10000 darstellt und die Gruppe

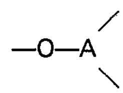

ausgewählt ist aus

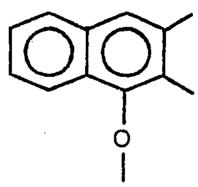

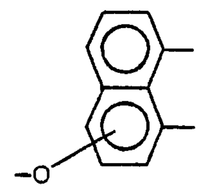

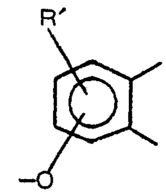

worin R' Wasserstoff, nieders Alkyl oder niederes Alkoxy ist, Z ein Glied ist uas der Klasse, bestehend aus (1)

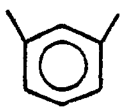

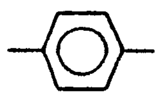

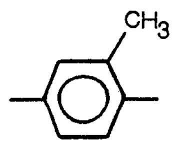

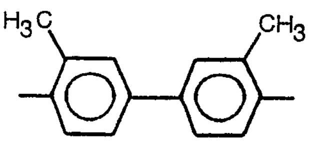

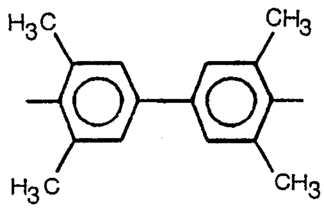

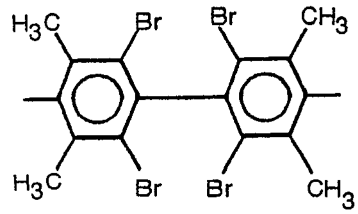

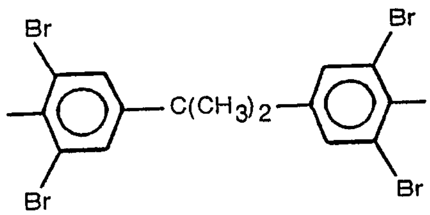

und (2) zweiwertigen organischen Resten der allgemeinen Formel

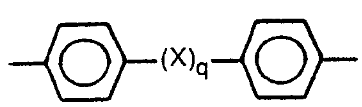

worin x ein Glied ist, ausgewählt aus der Klasse, bestehend aus zweiwertigen Resten der Formel

$$-C_yH_{2y}-,\ -\overset{\overset{\large O}{||}}{C}-,\quad -\overset{\overset{\large O}{||}}{\underset{\underset{\large O}{||}}{S}}-,\ -O-,\ \text{und}\ -S-,$$

worin q 0 oder 1 ist, y eine ganze Zahl von 1 bis 5 ist und R ein zweiwertiser orgnischer Rest ist, ausgewählt aus der Klasse, bestehend aus (1) aromatischen Kohlenwasserstoffresten mit 6 bis 20 Kohlenstoffatomen und halogenierten Derivaten derselben, (2) Alkylenresten und Cycloalkylenresten mit 2 bis 20 Kohlenstoffatomen, Polydiorganosiloxan mit $C_{(2-8)}$ Alkylenendgruppe und (3) zweiwertigen Resten der Formel

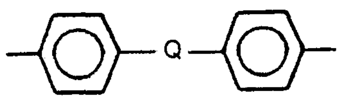

worin Q ein Glied ist, ausgewählt aus der Klasse, bestehend aus

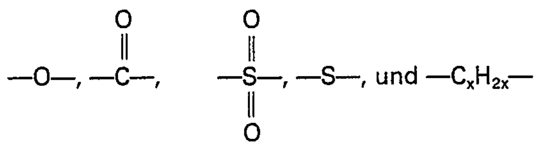

worin x eine ganze Zahl von 1 bis 5 einschließlich ist.

2. Lagerzusammensetzung nach Anspruch 1, worin die Gruppe

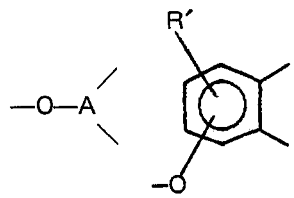

ist.

3. Lagerzusammensetzung nach Anspruch 2, worin Z

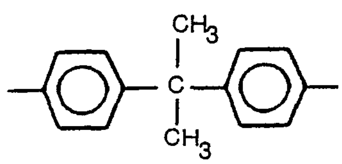

ist und R

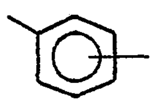 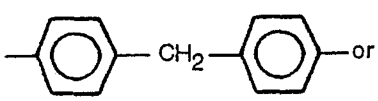 or 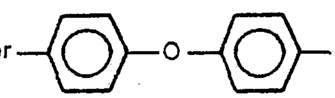

ist.

4. Lagerzusammensetzung nach Anspruch 1, worin das Polyätherimidharz die Formel

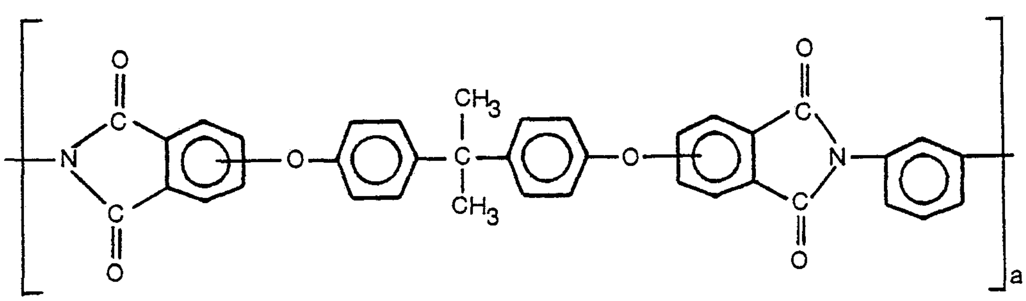

aufweist, worin n eien ganze Zahl von 10 bis etwa 100 ist.

5. Lagerzusammensetzung nach Anspruch 1, 2, 3 oder 4, worin das Polyätherimidharz eine Glasübergangstemperatur von wenigstens etwa 200°C, das Fluorpolymer Polytetrafluoräthylen ist, welches eine Teilchengröße von 1 bis 25 Micrometer aufweist und in einer Konzentration von 5 bis 20 Gew.-% der Zusammensetzung vorliegt.

6. Lagerzusammensetzung nach Anspruch 5, worin das Schmiermittel Molybdändisulfid oder ein Molybdändisulfid enthaltendes Schmiermittel ist und in einer Konzentration von 1 bis 15 Gew.-% der Zusammensetzung vorliegt.

7. Lagerzusammensetzung nach Anspruch 5, worin das Schmiermittel Siliconfluid ist, welches in einer Konzentration von 1 bis 5 Gew.-% der Zusammensetzung vorliegt.

8. Lagerzusammensetzung nach Anspruch 5, worin das Schmiermittel Graphit ist und in einer Konzentration von 5 bis 20 Gew.-% der Zusammensetzung vorliegt.

9. Lagerzusammensetzung nach Anspruch 6, worin das Verstärkungsmittel aus Glasfasern besteht, die kurz gehackte Stränge mit durchschnittlichen Längen von 3 mm bis 6 mm aufweisen, worin die Glasfasern in einer Konzentration von 5 bis 40 Gew.-% der Zusammensetzung vorliergen.

10. Lagerzusammensetzung nach Anspruch 6, worin das Verstärkungsmittel aus Kohlenstoffasern besteht, die in Strängen von durchschnittlichen Längen von 0,4 mm bis 6 mm und durchschnittlichen Durchmessern von 5 Micrometern bis 25 Micrometern vorliegen, worin diese Kohlenstoffasern in einer Konzentration von 5 bis 30 Gew.-% der Zusammensetzung vorliegen.

11. Lagerzusammensetzung nach Anspruch 6, worin das verstärkende Mittel Glasperlen mit einer durchschnittlichen Teilchengröße von etwa 1 bis etwa 55 Micrometern enthält und worin diese Glasperlen in einer Konzentration von 5 bis 40 Gew.-% der Zusammensetzung vorliegen.

12. Lagerzusammensetzung nach Anspruch 8, worin das Polyätherimidharz eine Glasübergangstemperatur von wenigstens etwa 215°C aufweist.

13. Lagerzusammensetzung nach Anspruch 4, worin das Polytetrafluoräthylen eine Teilchengröße von 5 bis etwa 10 Micron aufweist und in einer Konzentration von etwa 15 Gew.-% der Zusammensetzung vorliegt; das Schmiermittel Molybdändisulfid ist mit einer Teilchengröße von 200 bis 300 Maschen (0,075 bis 0,014 mm) und in einer Konzentration von 2,5 Gew.-% der Zusammensetzung vorliegt, das Verstärkungsmittel aus Silan behandelten Glasfasern besteht, die als kurzgehackte Stränge mit einer durchschnittlichen Länge von etwa 3 mm vorliegen und die in einer Konzentration von etwa 25 Gew.-% der Zusammensetzung vorhanden sind.

**Revendications**

1. Composition pour palier, comprenant une résine de polyétherimide de formule:

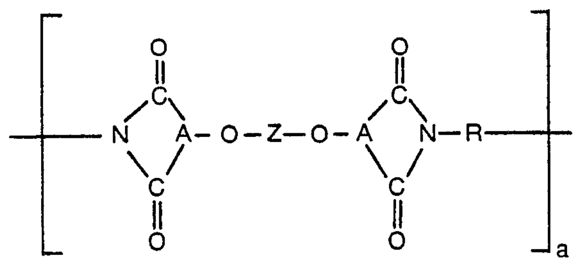

et les agents modifiants et les agents de renforcement suivants: (a) de 1% à 25% en poids d'un polymère fluoré, (b) de 1% à 25% en poids d'un agent de lubrifation chois parmi les groupe comprenant une silicone fluide, du bisulfure de molybdène, du graphite ou un lubrifiant solide contenant du bisulfure de molybdène ou un mélange quelconque de ceux-ci; et (c) de 0% à 50% d'un agent de renforcement choisi parmi le groupe comprenant des fibres de verre, des fibres de carbone, des perles de verre et des mélanges de ceux-ci; dans laquelle les proportions précitées sont choisies de telle façon que ladite composition pour palier contienne de 35% en poids à 65% en poids de résine de polyétherimide et de 40% en poids à 65% en poids d'agents modifiants et d'agents de renforcement; "a" représentant un nombre entier de 10 à 10,000, le groupe —O—A< étant choisi parmi les groupes:

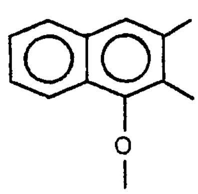
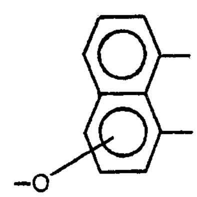
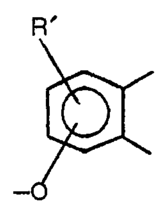

où R' est un atome d'hydrogène, un groupe alkyle inférieur ou un groupe alloxy inférieur; Z étant un groupe choisi parmi (1) les groupes:

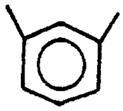

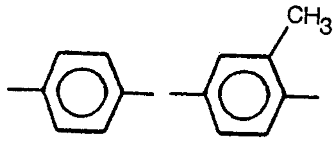

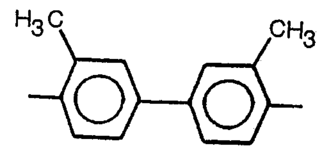

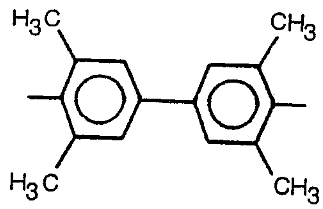

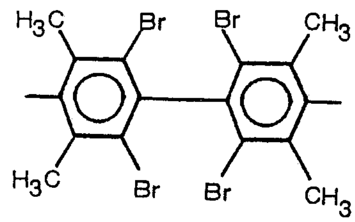

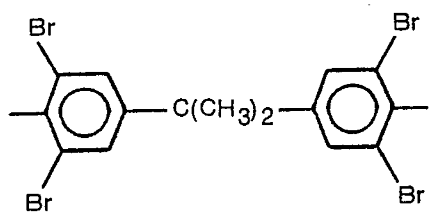

et (2) les groupes organiques bivalents de formule générale:

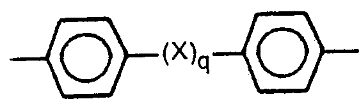

dans laquelle X est un groupe choisi parmi les groupes bivalents de formule:

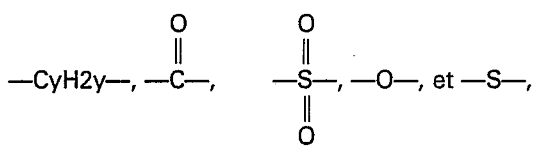

où q est égal à 0 ou 1, y est un nombre entier de 1 à 5 et R est un groupe organique bivalent choisi parmi (1) les groupes hydrocarbonés aromatiques ayant de 6 à 20 atomes de carbone et les dérivés halogénés de ceux ci, (2) les groupes alkylène et les groupes cycloalkylène ayant de 2 à 20 atomes de carbone, un polydiorganosiloxane à terminaison alkylène en $C_{(2-8)}$, et (3) les groupes bivalents de formule:

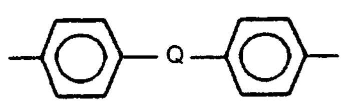

dans laquelle Q est un grope choisi parmi les groupes:

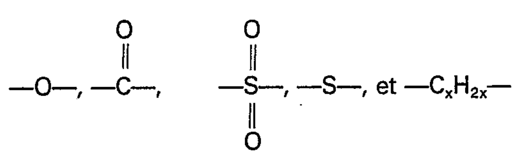

où x est un nombre entier de 1 à 5 inclus.

2. Composition pour palier suivant la revendication 1, dans laquelle le groupe —O—A< est:

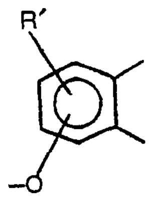

3. Composition pour palier suivant la revendication 2, dans laquelle Z est:

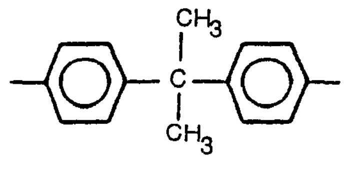

et R est:

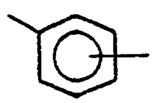

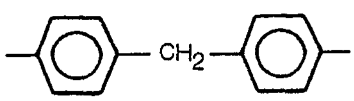

or

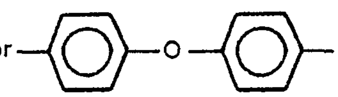

4. Composition pour palier suivant la revendication 1, dans laquelle la résine de polyétherimide a la formule:

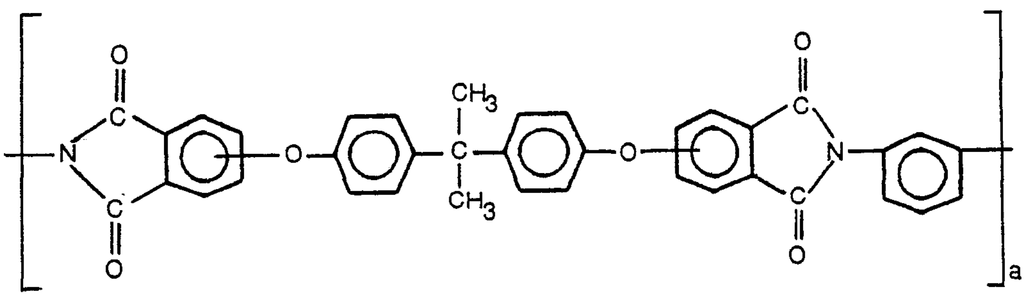

dans laquelle n est un entier de 10 à environ 100.

5. Composition pour palier suivant la revendication 1, 2, 3 ou 4, dans laquell la résine de polyétherimide a une température de transition vitreuse d'au moins environ 200°C, et dans laquelle le polymère fluoré est du polytétrafluoroéthylène ayant une granulométrie de 1 à 25 µm et étant présent en une concentration de 5% en poids à 20% en poids par rapport à la composition.

6. Composition pour palier selon la revendication 5, dans laquelle l'agent de lubrification est du bisulfure de molybdène ou un lubrifiant contenant du bisulfure de molybdène et il est présent en une concentration de 1% en poids à 15% par rapport à la composition.

7. Composition pour palier suivant la revendication 5, dans laquelle l'agent de lubrification est une silicone fluide et il est présent en une concentration de 1% en poids à 5% par rapport à la composition.

8. Composition pour palier selon la revendication 5, dans laquelle l'agent de lubrification est du graphite et il est présent en une concentration de 5% en poids à 20% en poids par rapport à la composition.

9. Composition pour palier suivant la revendication 6, dans laquelle l'agent de renforcement, consiste en fibres de verre comportant des fils coupés d'une longeur moyene de 3 mm à 6 mm, lesdites fibres de verre étant présentes en une concentration de 5% en poids à 40% par rapport à la composition.

10. Composition pour palier suivant la revendication 6, dans laquelle l'agent de renforcement consiste en fibres de carbone comportant des fils 'une longeur moyenne de 0,4 mm à 6 mm et d'un diamètre moyen de 5 µm à 25 µm, lesites fibres de carbone étant présentes en une concentration de 5% à 30% en poids par rapport à la composition.

11. Composition pour palier suivant la revendication 6, dans laquelle l'agent de renforcement contient des perles de verre ayant une granulométrie moyenne d'environ 1 à environ 55 µm et dans laquelle lesdites fibres de verre sont présentes en une concentration de 5% en poids à 40% en poids par rapport à la composition.

12. Composition pour palier suivant la revendication 8, dans laquelle la résine de polyétherimide a une temperature de transition vitreuse d'au moins environ 215°C.

13. Composition pour palier suivant la revendication 4, dans laquelle le polytétrafluoroéthylène a une granulométrie de 5 à environ 10 µm et est présent en une concentration d'environ 15% d'u poids de la composition, dans laquelle l'agent de lubrification est du bisulfure de molybdène ayant un granulométrie de 200 (0,075 mm) à 300 mesh (0,040 mm) et est présent en une concentration d'environ 2,5% du poids de la composition et dans laquelle l'agent de renforcement consiste en fibres de verre traitées avec un silane comportant des fils coupés d'une longeur moyenne d'environ 3 mm et qui est présent en une concentration d'environ 25% du poids de la composition.